# EUROPÄISCHE PATENTANMELDUNG

(11) **EP 3 626 423 A1**
(43) Veröffentlichungstag der Anmeldung: **25.03.2020**
(21) Anmeldenummer: 18450008.0
(22) Anmeldetag: 20.09.2018
(51) Int. Cl.: B29C 44/10, B29C 44/58, B29C 44/02, B29C 44/12, B29C 33/20

(54) **VERFAHREN ZUR HERSTELLUNG EINES BAUTEILS SOWIE FORMWERKZEUG ZUR DURCHFÜHRUNG DES VERFAHRENS**

(71) Anmelder: ALBA Tooling & Engineering GmbH, 5552 Forstau (AT)
(72) Erfinder: Sieder, Wolfgang, A-8970 Schladming (AT)
(74) Vertreter: Keschmann, Marc

(57) **Zusammenfassung**

Bei einem Verfahren zur Herstellung eines Bauteils mithilfe eines Formwerkzeugs (6), umfassend ein erstes Formenträgerteil(1), das eine ersten Formhälfte (3) trägt, ein zweites Formenträgerteil (2), das eine zweite Formhälfte (4) trägt, und eine mit einem Fluid, insbesondere Luft, befüllbare, zwischen dem ersten Formenträger und der ersten Formhälfte angeordnete elastisch aufweitbare Kammer (5), wobei ein aufschäumendes Material in einer Füllphase in einen durch die Formhälften gebildeten Hohlraum eingebracht sowie in einer Steigphase aufschäumen und in einer Härtungsphase aushärten gelassen wird, wobei die erste Formhälfte durch den Fluiddruck in der Kammer in Richtung der zweiten Formhälfte gedrückt wird, ist vorgesehen, dass der Fluiddruck in der Kammer während oder nach der Füllphase verringert wird, sodass der Druck während zumindest eines Teilabschnitts der Steigphase verringert ist, und der Druck in der Kammer danach erhöht wird, wodurch das Formwerkzeug geschlossen wird.

## Beschreibung

Die Erfindung betrifft ein Verfahren zur Herstellung eines Bauteils mithilfe eines Formwerkzeugs, umfassend ein erstes Formenträgerteil, das eine ersten Formhälfte trägt, ein zweites Formenträgerteil, das eine zweite Formhälfte trägt, und eine mit einem Fluid, insbesondere Luft, befüllbare, zwischen dem ersten Formenträgerteil und der ersten Formhälfte angeordnete elastisch aufweitbare Kammer, wobei ein aufschäumendes Material in einer Füllphase in einen durch die Formhälften gebildeten Hohlraum eingebracht sowie in einer Steigphase aufschäumen und in einer Härtungsphase aushärten gelassen wird, wobei die erste Formhälfte durch den Fluiddruck in der Kammer in Richtung der zweiten Formhälfte gedrückt wird.

Weiters betrifft die Erfindung ein Formwerkzeug zur Durchführung des erfindungsgemäßen Verfahrens.

Aus dem Stand der Technik sind Verfahren bekannt, mit denen unter Verwendung eines Formwerkzeugs Bauteile aus schaumartigen Strukturen hergestellt werden können. Das Formwerkzeug weist üblicherweise zwei Formhälften auf, die so angeordnet werden können, dass sie einen Hohlraum begrenzen. In diesem Hohlraum befindet sich ggf. ein Trägerelement, auf welches das Material aufgeschäumt werden soll und ggf. ein Dekor, das gegenüberliegend zum Träger auch mit dem Schaum verbunden wird. In den Hohlraum wird ein aufschäumendes Material eingebracht, welches nach dem Einbringen in einer Steigphase aufschäumt und den Hohlraum einnimmt. Abschließend härtet das Material aus und wird als festes schaumartiges Bauteil nach dem Öffnen des Formwerkzeuges aus diesem entnommen. Hierbei wird grundsätzlich zwischen offenen und geschlossenen Verfahren unterschieden. Bei offenen Verfahren wird das Material in die offene Form eingebracht, wonach das Formwerkzeug geschlossen wird. Bei geschlossenen Verfahren wird das Material in das bereits geschlossene Formwerkzeug eingebracht. Um ein Entlüften der Form zu ermöglichen, wird die Form kurzzeitig geöffnet und dann sofort wieder geschlossen.

Um das Formwerkzeug zu schließen, werden die Formenträgerteile samt den Formhälften zueinander bewegt, bis ein Resthub verbleibt. Für die Betätigung des Resthubes werden bei einigen Ausführungsformen elastisch aufweitbare Kammern in Form von Luftkissen eingesetzt, die mit einem Fluid befüllbar sind und zwischen einem Formenträgerteil und der zugeordneten Formhälfte angeordnet sind. Durch eine Druckerhöhung im Inneren des Luftkissens wird die Formhälfte von dem diese tragenden Formenträgerteil weiter beabstandet, wodurch die Formhälfte auf die gegenüberliegende Formhälfte zubewegt wird. Das Luftkissen ermöglicht hierbei eine präzise steuerbare Schließbewegung sowie eine Einstellung des Schließdruckes. Analog kann durch entsprechende Druckreduzierung im Luftkissen die Öffnung der Form gesteuert werden.

Wie bereits erwähnt, wird zur Herstellung von Bauteilen, die eine Trägerschicht und eine darüber liegende Schicht aus aufgeschäumtem Material aufweisen, so vorgegangen, dass die Trägerschicht bzw. das Trägerelement in eine der beiden Formhälften eingelegt wird, auf welche das aufschäumbare Material dann aufgebracht wird. Die Form des auf dem Trägerelement zu erzeugenden Schaumkörpers wird durch die geschlossene Form definiert. Bei den bekannten Verfahren zur Erzeugung solcher Bauteile besteht das Problem, dass sich das Schaummaterial nicht ausreichend mit dem Trägerelement verbindet, sodass es nach dem Aushärten oftmals nicht ausreichend am Trägerelement haftet, wodurch das Bauteil fehlerhaft ist und ausgeschieden werden muss.

Es ist daher eine Aufgabe der Erfindung, ein Verfahren bereitzustellen, bei dem die Haftung des Schaummaterials am Trägerelement im ausgehärteten Zustand verbessert wird.

Zur Lösung dieser Aufgabe ist bei einem Verfahren der eingangs genannten Art im Wesentlichen vorgesehen, dass der Fluiddruck in der Kammer während oder nach der Füllphase verringert wird, sodass der Druck während zumindest eines Teilabschnitts der Steigphase verringert ist, und der Druck in der Kammer danach erhöht wird, wodurch das Formwerkzeug geschlossen wird.

Es hat sich überraschend herausgestellt, dass durch eine solche zeitweilige Druckentlastung und die damit verbundene Öffnung des Formwerkzeuges während der Steigphase (Steigzeit) eine deutliche Verbesserung der Haftung des Schaummaterials an einem Trägerelement erzielt werden kann. Es wird vermutet, dass die Druckentlastung dazu führt, dass das Material während der Steigzeit besser fließen kann, sodass es sich besser mit der Oberflächenstruktur des Trägerelements verbinden kann. Entscheidend ist hierbei, dass die Druckverringerung zumindest über einen Teilabschnitt der Steigzeit gehalten wird, damit ausreichend Zeit zur Verfügung steht, in welcher das aufschäumende Material verweilen bzw. steigen kann. Bevorzugt wird der verringerte Druck während eines zumindest 2-40 Sekunden, bevorzugt 3-20 Sekunden dauernden Zeitabschnitts gehalten. Das erfindungsgemäße Verfahren kann sowohl bei offenen als auch geschlossenen Verfahren eingesetzt werden.

Bevorzugt weist der Druckverlauf vier Abschnitte auf. In einem ersten Abschnitt wird der Druck in der elastisch aufweitbaren Kammer erhöht, bspw. auf 3-6 bar, bevorzugt 4 bar, sodass das Formwerkzeug geschlossen oder nahezu geschlossen wird. Vor, während oder nach diesem Abschnitt wird das Material in die Form eingebracht. In einem zweiten Abschnitt wird der Druck in der elastisch aufweitbaren Kammer erfindungsgemäß bspw. auf 0,2-2 bar, bevorzugt 1 bar, verringert, sodass das Formwerkzeug wieder etwas geöffnet wird. In dem zweiten Abschnitt steigt das Material. Anschließend wird der Druck in der elastischen Kammer wieder erhöht, bis das Formwerkzeug völlig geschlossen ist. Bei geschlossenem Werkzeug findet die Härtungsphase statt. Abschließend wird der Druck in der elastisch aufweitbaren Kammer wieder reduziert, um das Formwerkzeug zu öffnen und das Bauteil mit dem gehärteten Schaum zu entnehmen.

Das Material durchläuft während der Herstellung bevorzugt vier Phasen. Während der Füllphase wird das Material in den Hohlraum eingebracht ohne dass es steigt. In der Startzeit beginnen chemische Reaktionen abzulaufen, die bereits im Mischkopf, welcher das Material in den Hohlraum einbringt, beginnen, bspw. durch die Vermischung von Polyol und Isocyanat. Nach Ablauf der Startzeit beginnt das Material aufzuschäumen (Steigphase) und sein Volumen zu vergrößern. Nach der Steigphase beginnt die Härtungsphase, in welcher das Material fest wird. Die Übergänge zwischen den einzelnen Phasen sind fließend, bspw. kann das Material bereits teilweise während der Füllphase bzw. der Startphase beginnen aufzuschäumen oder es kann während der Steigphase schon zu einem geringen Aushärten kommen.

Bevorzugt ist vorgesehen, dass im Hohlraum vor dem Schließen des Formwerkzeuges ein Trägerelement angeordnet wird, auf welches das aufschäumende Material aufgebracht wird und mit dem sich das Material während der Herstellung im Formwerkzeug verbindet. In einer weiteren Ausführung, kann auch noch dem Trägerteil gegenüberliegend ein Dekor mit verschäumt werden.

Weiters ist bevorzugt vorgesehen, dass als Fluid zum Füllen der elastisch aufweitbaren Kammer ein Gas, insbesondere Luft verwendet wird. Umgebungsluft hat den Vorteil, dass es im Bedarfsfall einfach angesaugt bzw. wieder in die Umgebung abgegeben werden kann.

Bevorzugt ist vorgesehen, dass der Fluiddruck in der Kammer während eines ersten Teilabschnitts der Steigphase verringert ist und die anschließende Druckerhöhung in einem zweiten Teilabschnitt der Steigphase erfolgt. Die Druckentlastung dauert somit nicht über die gesamte Steigphase an, sondern findet nur während eines ersten Teilabschnitt der Steigphase statt. Im zweiten Teilabschnitt der Steigphase, in welchem das Material bereits so stark aufgeschäumt ist, dass die Gefahr eines Austretens aus der Form besteht, wird das Formwerkzeug geschlossen. Dadurch wird ein Überschäumen wirksam verhindert.

Weiters ist bevorzugt vorgesehen, dass das Formwerkzeug vor der Füllphase mithilfe einer wenigstens eines der Formenträgerteile betätigenden Schließvorrichtung bis zu einem definierten Abstand zwischen der ersten und der zweiten Formhälfte gebracht wird und anschließend der Druck in der Kammer für die Schließbewegung erhöht wird. Die Schließvorrichtung kann hierbei bspw. pneumatisch, hydraulisch oder elektrisch angetrieben sein und schließt das Formwerkzeug bis auf einen definierten Spalt zwischen den Formhälften. Um diesen Spalt zu reduzieren und bevorzugt das Formwerkzeug vollständig zu schließen, also den Abstand zwischen den Formhälften auf null zu verringern, wird die elastische Kammer genutzt. Der definierte Abstand beträgt bevorzugt zwischen 5 und 40 mm, besonders bevorzugt zwischen 10 und 20 mm.

Bevorzugt ist vorgesehen, dass die erste Schließbewegung zumindest teilweise während der Füllphase erfolgt. In diesem Fall wird das Material bereits während des Schließens des Formwerkzeuges eingebracht. Dadurch kann die Entlüftung bereits während der Materialeinbringung erfolgen. Alternativ kann vorgesehen sein, dass das (gesamte) Material erst nach dem Schließen des Formwerkzeuges eingebracht wird. Unter dem Schließen des Formwerkzeuges kann hierbei entweder ein vollständiges Schließen oder ein Schließen bis zu einem bestimmten Abstand verstanden werden. Es kann weiters vorgesehen sein, dass das Material bereits (vollständig oder teilweise) vor dem Schließen des Formwerkzeuges in das Formwerkzeug eingebracht wird.

Weiters ist bevorzugt vorgesehen, dass die Schließbewegung nach Abschluss der Füllphase fortgesetzt wird, bis die Form geschlossen ist. Hierbei ist das Material bereits vollständig im Formwerkzeug angeordnet, bevor das Formwerkzeug (vollständig) geschlossen ist. Dies ermöglicht eine gute Entlüftung des Hohlraumes während der Füllphase und damit eine gute Verteilung des aufschäumenden Materials innerhalb des Hohlraumes.

Bei einer bevorzugten Ausbildung ist vorgesehen, dass die Füllphase bei oder nach dem Schließen der Form beendet wird.

Besonders gute Ergebnisse insbesondere bei der Anhaftung des Schaummaterials an ein Trägerelement werden erzielt, wenn, wie bevorzugt vorgesehen, die Druckverringerung in der Kammer auf einen Wert von 10-80%, bevorzugt 20-50% des vor der Druckverringerung herrschenden Drucks vorgenommen wird.

Die erfindungsgemäße Druckentlastung während der Steigphase umfasst bevorzugt das, bevorzugt kontinuierliche, Absenken auf einen bestimmten Druck, das Halten dieses Druckes für einen Zeitabschnitt und das anschließende, bevorzugt kontinuierliche, Erhöhen des Drucks. Alternativ wird der Druck während des Absenkens mehrfach, bspw. kontinuierlich geändert. Das Druckprofil kann zwei oder mehr Stufen umfassen. Bevorzugt ist vorgesehen, dass der Druck zuerst auf einen ersten Zwischendruck, bspw. 0,2-2 bar, bevorzugt ca. 1 bar, gesenkt und für bspw. 2-10 Sekunden, bevorzugt ca. 3 Sekunden, gehalten wird. Anschließend wird der Druck auf einen zweiten Zwischendruck, bspw. 2-5 bar, bevorzugt ca. 3 bar erhöht und dieser zweite Zwischendruck kurz, bevorzugt für 2-10 Sekunden, besonders bevorzugt ca. 3 Sekunden, gehalten. Anschließend wird der Druck weiter erhöht, sodass das Formwerkzeug vollständig geschlossen wird.

Die Erfindung betrifft weiters ein Formwerkzeug zur Durchführung eines erfindungsgemäßen Verfahrens umfassend ein erstes Formenträgerteil, das eine ersten Formhälfte trägt, ein zweites Formenträgerteil, das eine zweite Formhälfte trägt und eine mit einem Fluid, insbesondere Luft, befüllbare, zwischen dem ersten Formenträgerteil und der ersten Formhälfte angeordnete elastisch aufweitbare Kammer, wobei die Kammer derart angeordnet ist, dass sie im gefüllten Zustand auf die erste Formhälfte Druck in Richtung der zweiten Formhälfte ausübt.

Bevorzugt ist eine Steuervorrichtung vorgesehen, um den Fluiddruck in der Kammer zu steuern. Bspw. ist die elastisch aufweitbare Kammer über eine Druckleitung mit dem Fluid beaufschlagt, wobei ein von der Steuervorrichtung gesteuertes Ventil vorgesehen ist, um den Druck in der Kammer zu erhöhen bzw. zu reduzieren. Bevorzugt ist ein Schnellentlüftungsventil vorgesehen, um eine schnelle Druckreduktion zu ermöglichen. In der elastisch aufweitbaren Kammer ist bevorzugt ein Drucksensor angeordnet, der mit der Steuervorrichtung verbunden ist. Bevorzugt weist die Steuervorrichtung weiters Eingabemittel auf, um die Steuervorrichtung zu programmieren.

Um den Fluiddruck flexibel anpassen zu können, weist das Formwerkzeug bevorzugt zumindest einen Drucksensor auf, der mit der Steuervorrichtung verbunden ist und angeordnet ist, um den Druck im Hohlraum zu erfassen. Dadurch kann der Druck in der elastisch aufweitbaren Kammer in Abhängigkeit des Drucks im Hohlraum gesteuert werden.

Weiters ist bevorzugt vorgesehen, dass die Steuervorrichtung eingerichtet ist, um den Fluiddruck in der Kammer während eines ersten Teilabschnitts der Steigphase zu verringern und in einem zweiten Teilabschnitt der Steigphase den Fluiddruck zu erhöhen.

Weiters ist bevorzugt vorgesehen, dass die Steuervorrichtung eingerichtet ist, um das Formwerkzeug vor der Füllphase mithilfe einer Schließvorrichtung bis zu einem definierten Abstand zwischen der ersten und der zweiten Formhälfte zu bringen und anschließend den Druck in der Kammer für die Schließbewegung zu erhöhen.

Bevorzugt ist vorgesehen, dass die Steuervorrichtung eingerichtet ist, um den Fluiddruck zumindest teilweise während der Füllphase zu erhöhen.

Bevorzugt ist vorgesehen, dass die Steuervorrichtung eingerichtet ist, um die Schließbewegung nach Abschluss der Füllphase fortzusetzten, bis die Form geschlossen ist.

Bevorzugt ist vorgesehen, dass die Steuervorrichtung eingerichtet ist, um die Füllphase bei oder nach dem Schließen der Form zu beenden.

Bevorzugt ist vorgesehen, dass die Steuervorrichtung eingerichtet ist, um die Druckverringerung in der Kammer auf einen Wert von 10-80%, bevorzugt 20-50% des vor der Druckverringerung herrschenden Drucks vorzunehmen.

Bevorzugt ist vorgesehen, dass die Steuervorrichtung eingerichtet ist, um den Druck während zumindest eines 2-40 Sekunden, bevorzugt 3-20 Sekunden dauernden Zeitabschnitts zu verringern.

Bevorzugt ist vorgesehen, dass die elastische Kammer durch ein Kissen gebildet ist.

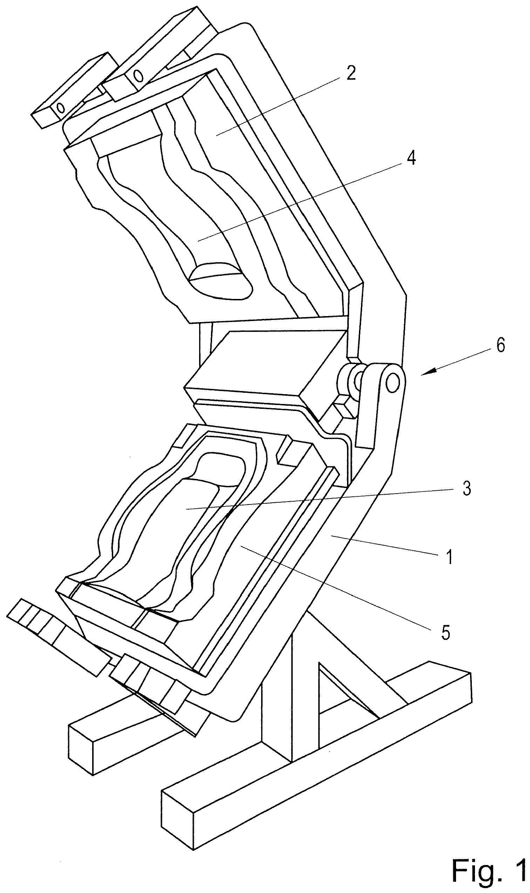

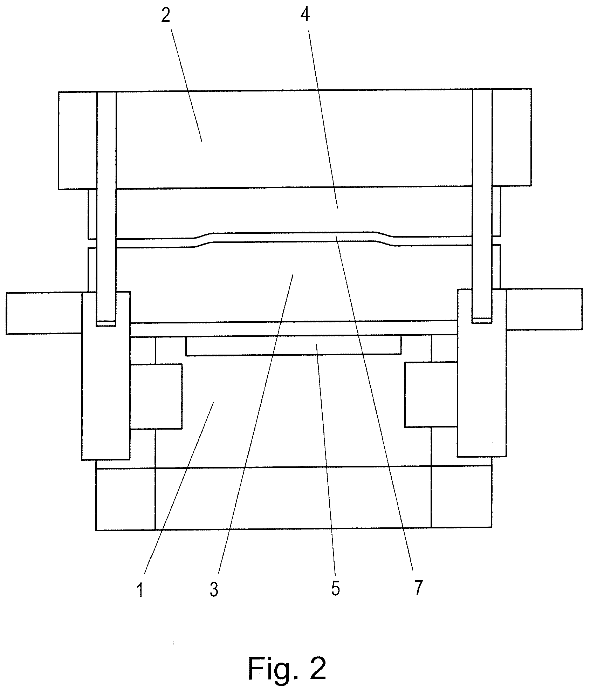

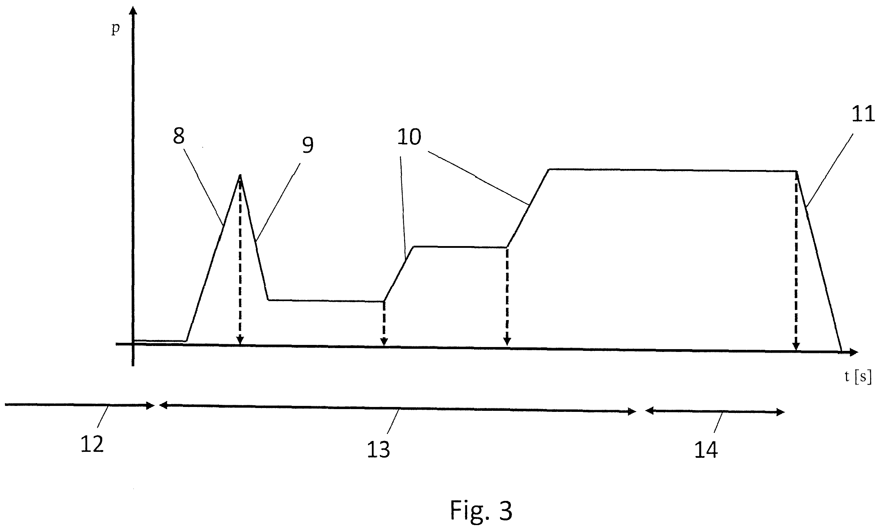

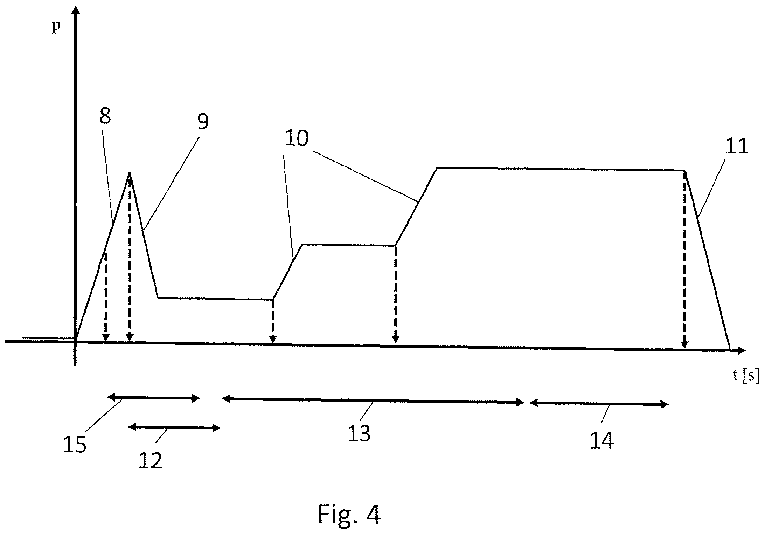

Die Erfindung wird nachfolgend anhand eines in der Zeichnung dargestellten Ausführungsbeispiels näher erläutert. In dieser zeigt Fig. 1 ein erfindungsgemäßes Formwerkzeug in geöffneter Stellung der Formhälften vor Durchführung des erfindungsgemäßen Verfahrens, Fig. 2 das Formwerkzeug gemäß Fig. 1 in geschlossener Stellung mit nicht gefüllter Kammer, Fig. 3 einen erfindungsgemäßen Druckverlauf in einer erfindungsgemäß vorgesehenen elastisch aufweitbaren Kammer bei einem offenen Verfahren und Fig. 4 einen erfindungsgemäßen Druckverlauf in einer elastisch aufweitbaren Kammer bei einem geschlossenen Verfahren.

In der Fig. 1 ist ein Formwerkzeug, umfassend einen ersten Formträger 1 und einen zweiten Formträger 2, in geöffneter Stellung der Formträger 1,2 dargestellt. Der Formträger 1 trägt eine erste Formhälfte 3 und der zweite Formträger 2 trägt eine zweite Formhälfte 4. Die Formhälften 3 und 4 bilden im geschlossenen Zustand gemeinsam einen Hohlraum aus. Zwischen dem ersten Formträger 1 und der ersten Formhälfte 3 ist eine elastisch aufweitbare Kammer 5 in Form eines Luftkissens angeordnet. Das Formwerkzeug weist weiters eine Schließvorrichtung 6 auf, die ausgebildet ist, um das Formwerkzeug zu schließen.

In Fig. 2 ist das Formwerkzeug gemäß Fig. 1 im geschlossenen Zustand dargestellt. Mithilfe der Schließvorrichtung 6 wurden die beiden Formhälften 3,4 einander angenähert und weisen einen definierten Abstand 7 voneinander auf. Durch ein Füllen der elastisch aufweitbaren Kammer 5 mit einem Fluid, bspw. Luft, vergrößert sich das Volumen der Kammer 5, wodurch die Formhälfte 3 gegen die Formhälfte 4 gedrückt wird, sodass der Abstand 7 verringert und das Formwerkzeug vollständig geschlossen werden kann. Durch ein Entleeren der Kammer 5 und die entsprechende Verkleinerung des Volumens der Kammer 5 kann der Abstand 7 anschließend wieder vergrößert werden.

In Fig. 3 ist ein erfindungsgemäßer Druckverlauf in der elastisch aufweitbaren Kammer 5 während eines ersten erfindungsgemäßen Verfahrens dargestellt. Auf der vertikalen Achse ist der Druck p in der Kammer 5 und auf der horizontalen Achse der Zeitverlauf t aufgetragen. Zu Beginn ist kein bzw. ein sehr geringer Druck in der Kammer 5. Das Formwerkzeug wurde mit dem aufschäumenden Material gefüllt und mithilfe der Schließvorrichtung 6 geschlossen, sodass die Formhälften 3,4 lediglich durch einen geringen Abstand getrennt sind (siehe Fig. 2). In diesem Zeitabschnitt endet die Startzeit 12 und die Steigphase 13 beginnt, dass heißt, das in das Formwerkzeug eingebrachte Material beginnt aufzuschäumen und vergrößert sein Volumen. Während der Steigphase 13 wird in einem ersten Abschnitt 8 nunmehr der Druck in der elastisch aufweitbaren Kammer 5 erhöht. Bspw. wird innerhalb von 1 Sekunde der Druck auf 4 bar erhöht. Im dargestellten Beispiel wird hierdurch die Kammer 5 vollständig geschlossen, sodass kein Abstand zwischen den Formhälften 3,4 verbleibt. Anschließend wird der Druck in einem zweiten Abschnitt 9 in der Kammer 5 wieder gesenkt, sodass sich der Abstand zwischen den Formhälften 3,4 wieder vergrößert. Hierbei wird ein Haltedruck von bspw. 1 bar erreicht, der für eine bestimmte Zeitdauer, bspw. 2-10 Sekunden, gehalten wird. Anschließend wird der Druck in der Kammer 5 während der Steigphase 13 stufenweise erhöht, bis das Formwerkzeug wieder vollständig geschlossen ist (dritter Abschnitt 10). Im dargestellten Beispiel wird der Druck im dritten Abschnitt 10 zuerst auf einen Zwischendruck von bspw. 3 bar erhöht, dieser Druck für etwa. 3 Sekunden gehalten und anschließend der Druck auf 4 bar erhöht, sodass das Formwerkzeug vollständig geschlossen wird. Im geschlossenen Zustand des Formwerkzeuges endet die Steigphase 13 und die Härtungsphase 14 beginnt. Nachdem das Bauteil ausgehärtet ist, wird der Druck in der Kammer 5 im vierten Abschnitt 11 abschließend gesenkt und das Formwerkzeug mithilfe der Schließvorrichtung 6 geöffnet.

Die Übergänge zwischen den einzelnen Phasen sind hierbei fließend, bspw. kann das Material bereits teilweise während der Füllphase beginnen aufzuschäumen bzw. während der Steigphase das Material teilweise aushärten.

In Fig. 4 ist ein erfindungsgemäßer Druckverlauf in der elastisch aufweitbaren Kammer 5 während eines zweiten erfindungsgemäßen Verfahrens dargestellt. Auf der vertikalen Achse ist wie in Fig. 3 der Druck p in der Kammer 5 und auf der horizontalen Achse der Zeitverlauf t aufgetragen. Zu Beginn ist kein bzw. ein sehr geringer Druck in der Kammer 5. Das Formwerkzeug wurde mithilfe der Schließvorrichtung 6 geschlossen, sodass die Formhälften 3,4 lediglich durch einen geringen Abstand getrennt sind (siehe Fig. 2). In einem ersten Abschnitt 8 wird nunmehr der Druck in der elastisch aufweitbaren Kammer 5 erhöht. Im dargestellten Beispiel wird hierdurch die Kammer 5 vollständig geschlossen, sodass kein Abstand zwischen den Formhälften 3,4 verbleibt. Während des ersten Abschnitts 8 wird mit dem Einbringen des Schaummaterials in das Formwerkzeug begonnen (Füllphase 15). Während dem Einbringen beginnt auch die Startzeit 12. Anschließend wird der Druck in einem zweiten Abschnitt 9 in der Kammer 5 wieder gesenkt, sodass sich der Abstand zwischen den Formhälften 3,4 wieder vergrößert. Hierbei wird ein Haltedruck von bspw. 1 bar erreicht, der für eine bestimmte Zeitdauer, bspw. 10-50 Sekunden, gehalten wird. Während dieser Zeitdauer werden sowohl die Füllphase 15 als auch die Startzeit 12 abgeschlossen und die Steigphase 13 beginnt. Anschließend wird der Druck in der Kammer 5 wieder erhöht, bis das Formwerkzeug vollständig geschlossen ist (dritter Abschnitt 10). Im dargestellten Beispiel wird der Druck im dritten Abschnitt 10 zuerst auf einen Zwischendruck von bspw. 3 bar erhöht, dieser Druck für etwa. 3 Sekunden gehalten und anschließend der Druck auf 4 bar erhöht, sodass das Formwerkzeug vollständig geschlossen wird. Im geschlossenen Zustand des Formwerkzeuges endet die Steigphase 13 und die Härtungsphase 14 beginnt. Nachdem das Bauteil ausgehärtet ist, wird der Druck in der Kammer 5 im vierten Abschnitt 11 abschließend gesenkt und das Formwerkzeug mithilfe der Schließvorrichtung 6 geöffnet.

## Patentansprüche

1. Verfahren zur Herstellung eines Bauteils mithilfe eines Formwerkzeugs, umfassend ein erstes Formenträgerteil, das eine ersten Formhälfte trägt, ein zweites Formenträgerteil, das eine zweite Formhälfte trägt, und eine mit einem Fluid, insbesondere Luft, befüllbare, zwischen dem ersten Formenträgerteil und der ersten Formhälfte angeordnete elastisch aufweitbare Kammer, wobei ein aufschäumendes Material in einer Füllphase in einen durch die Formhälften gebildeten Hohlraum eingebracht sowie in einer Steigphase aufschäumen und in einer Härtungsphase aushärten gelassen wird, wobei die erste Formhälfte durch den Fluiddruck in der Kammer in Richtung der zweiten Formhälfte gedrückt wird, **dadurch gekennzeichnet, dass** der Fluiddruck in der Kammer während oder nach der Füllphase verringert wird, sodass der Druck während zumindest eines Teilabschnitts der Steigphase verringert ist, und der Druck in der Kammer danach erhöht wird, wodurch das Formwerkzeug geschlossen wird.

2. Verfahren nach Anspruch 1, **dadurch gekennzeichnet, dass** der Fluiddruck in der Kammer während eines ersten Teilabschnitts der Steigphase verringert ist und die anschließende Druckerhöhung in einem zweiten Teilabschnitt der Steigphase erfolgt.

3. Verfahren nach Anspruch 1 oder 2, **dadurch gekennzeichnet, dass** das Formwerkzeug vor der Füllphase mithilfe einer Schließvorrichtung bis zu einem definierten Abstand zwischen der ersten und der zweiten Formhälfte gebracht wird und anschließend der Druck in der Kammer für die Schließbewegung erhöht wird.

4. Verfahren nach Anspruch 1, 2 oder 3, **dadurch gekennzeichnet, dass** die Schließbewegung zumindest teilweise während der Füllphase erfolgt.

5. Verfahren nach einem der Ansprüche 1 bis 4, **dadurch gekennzeichnet, dass** die Schließbewegung nach Abschluss der Füllphase fortgesetzt wird, bis die Form geschlossen ist.

6. Verfahren nach einem der Ansprüche 1 bis 4, **dadurch gekennzeichnet, dass** die Füllphase bei oder nach dem Schließen der Form beendet wird.

7. Verfahren nach einem der Ansprüche 1 bis 6, **dadurch gekennzeichnet, dass** die Druckverringerung in der Kammer auf einen Wert von 10-80%, bevorzugt 20-50% des vor der Druckverringerung herrschenden Drucks vorgenommen wird.

8. Verfahren nach einem der Ansprüche 1 bis 5, **dadurch gekennzeichnet, dass** der Druck während zumindest eines 2-40 Sekunden, bevorzugt 3-20 Sekunden dauernden Zeitabschnitts verringert ist.

9. Formwerkzeug zur Durchführung eines Verfahrens nach einem der Ansprüche 1 bis 6, umfassend ein erstes Formenträgerteil, das eine ersten Formhälfte trägt, ein zweites Formenträgerteil, das eine zweite Formhälfte trägt und eine mit einem Fluid, insbesondere Luft, befüllbare, zwischen dem ersten Formenträgerteil und der ersten Formhälfte angeordnete elastisch aufweitbare Kammer, wobei die Kammer derart angeordnet ist, dass sie im gefüllten Zustand auf die erste Formhälfte Druck in Richtung der zweiten Formhälfte ausübt.

10. Formwerkzeug nach Anspruch 9, **dadurch gekennzeichnet, dass** eine Steuervorrichtung vorgesehen ist, um den Fluiddruck in der Kammer zu steuern.

11. Formwerkzeug nach Anspruch 10, **dadurch gekennzeichnet, dass** die Steuervorrichtung eingerichtet ist, um den Fluiddruck in der Kammer während eines ersten Teilabschnitts der Steigphase zu verringern und in einem zweiten Teilabschnitt der Steigphase den Fluiddruck zu erhöhen.

12. Formwerkzeug nach Anspruch 10 oder 11, **dadurch gekennzeichnet, dass** die Steuervorrichtung eingerichtet ist, um das Formwerkzeug vor der Füllphase mithilfe einer Schließvorrichtung bis zu einem definierten Abstand zwischen der ersten und der zweiten Formhälfte zu bringen und anschließend den Druck in der Kammer für die Schließbewegung zu erhöhen.

13. Formwerkzeug nach Anspruch 10, 11 oder 12, **dadurch gekennzeichnet, dass** die Steuervorrichtung eingerichtet ist, um den Fluiddruck zumindest teilweise während der Füllphase zu erhöhen.

14. Formwerkzeug nach einem der Ansprüche 10 bis 13, **dadurch gekennzeichnet, dass** die Steuervorrichtung eingerichtet ist, um die Schließbewegung nach Abschluss der Füllphase fortzusetzten, bis die Form geschlossen ist.

15. Formwerkzeug nach einem der Ansprüche 10 bis 13, **dadurch gekennzeichnet, dass** die Steuervorrichtung eingerichtet ist, um die Füllphase bei oder nach dem Schließen der Form zu beenden.

16. Formwerkzeug nach einem der Ansprüche 10 bis 15, **dadurch gekennzeichnet, dass** die Steuervorrichtung eingerichtet ist, um die Druckverringerung in der Kammer auf einen Wert von 10-80%, bevorzugt 20-50% des vor der Druckverringerung herrschenden Drucks vorzunehmen.

17. Formwerkzeug nach einem der Ansprüche 10 bis 16, **dadurch gekennzeichnet, dass** die Steuervorrichtung eingerichtet ist, um den Druck während zumindest eines 2-40 Sekunden, bevorzugt 3-20 Sekunden dauernden Zeitabschnitts verringert zu halten.

18. Formwerkzeug nach einem der Ansprüche 9 bis 17, **dadurch gekennzeichnet, dass** die elastische Kammer durch ein Kissen gebildet ist.
